# EUROPÄISCHE PATENTSCHRIFT

(11) **EP 2 198 492 B1**
(45) Veröffentlichungstag und Bekanntmachung des Hinweises auf die Patenterteilung: **06.06.2012**
(21) Anmeldenummer: 08804134.8
(22) Anmeldetag: 12.09.2008
(51) Int. Cl.: H01S 3/02, H01S 3/13, F02P 23/04

(54) **LASERMODUL**
LASER MODULE
MODULE LASER

(30) Priorität: 10.10.2007 DE 102007048617
(43) Veröffentlichungstag der Anmeldung: 23.06.2010
(73) Patentinhaber: Robert Bosch GmbH, 70442 Stuttgart (DE)
(72) Erfinder: HERDEN, Werner, 70839 Gerlingen (DE); WEINROTTER, Martin, 70195 Stuttgart-botnang (DE); WOERNER, Pascal, 70469 Stuttgart (DE); RAIMANN, Juergen, 71263 Weil Der Stadt (DE)
(86) Internationale Anmeldenummer: PCT/EP2008/062171
(87) Internationale Veröffentlichungsnummer: WO 2009/049978

(56) Entgegenhaltungen:
- EP-A- 0 454 174
- EP-A- 0 645 804
- WO-A-2005/028856
- WO-A-2005/067112
- WO-A-2006/129502
- DE-A1- 3 109 568
- US-A- 3 993 965
- US-A- 5 430 756
- TETRATEC INDUSTRIES: "Tightness Testing and Leakage Rates"[Online] Mai 2007 (2007-05), Seiten 1-3, XP002528290 Gefunden im Internet: URL:http://www.tetratec.de/English/Downloa d/Leakagerates.pdf> [gefunden am 2009-05-13]
- "Fundamentals of Vacuum Technology: Leak Detection", INTERNET CITATION, [Online] 1 January 2002 (2002-01-01), pages D00.104-D00.119, XP009144768, Retrieved from the Internet: URL:http://www.schoonoverinc.com/PDFs/Leak %20Detection%20Fundamentals.pdf> [retrieved on 2011-02-16]

## Beschreibung

### Stand der Technik

Die Erfindung betrifft ein Lasermodul mit einem Gehäuse und mit mindestens einer in dem Gehäuse angeordneten Lasereinrichtung zur Erzeugung von Laserimpulsen.

Derartige Lasermodule sind bekannt, und die darin integrierte Lasereinrichtung verfügt beispielsweise über einen gütegeschalteten Festkörperlaser, der unter Beaufschlagung mit Pumplicht Laserimpulse erzeugt.

Die während des Betriebs eines derartigen Lasermoduls auftretenden hohen Strahlungsintensitäten der Laserstrahlung begünstigen eine Verschmutzung der optischen Oberflächen der Lasereinrichtung durch einen auch als "laser assisted deposition" (laserunterstützte Beschichtung) bezeichneten Effekt, demzufolge sich in dem Gehäuse befindliche, an sich unerwünschte, Partikel bevorzugt auf mit hohen Strahlungsintensitäten beaufschlagten Oberflächen niederschlagen, weil die Partikel durch diese Oberflächen in besonderer Weise angezogen werden. Um derartige Verunreinigungen der optischen Oberflächen möglichst gering zu halten, ist bei den herkömmlichen Lasermodulen vorgeschlagen, das Gehäuse des Lasermoduls möglichst dicht auszubilden und somit das Eindringen von Partikeln zu erschweren.

Eine hierbei angestrebte hermetische Abdichtung des Gehäuses ist jedoch insbesondere bei Einsatzgebieten mit höheren Umgebungstemperaturen bzw. Temperaturschwankungen und/oder anderen sich ändernden Umgebungsbedingungen wie beispielsweise einem Umgebungsdruck sehr aufwendig, insbesondere dann, wenn das Gehäuse einen oder mehrere optisch durchlässige Bereiche aufweist, die beispielsweise zur Auskopplung erzeugter Laserimpulse vorgesehen sind. Lasermodule sind insbesondere aus der US-A-5430 756, WO 2005/028856, EP-A 0454 174, WO 2006/129 502 A DE 11 2006 001 413 T5, US-A-3 993 965, WO 2005/067 112 A, EP-A-0 645 804 und der DE 3109 568 A1 bekannt.

### Offenbarung der Erfindung

Dementsprechend ist es Aufgabe der vorliegenden Erfindung, ein Lasermodul der eingangs genannten Art dahingehend zu verbessern, dass eine Verschmutzung, insbesondere eine Verschlechterung der optischen Oberflächen der Lasereinrichtung durch Partikelbeaufschlagung oder dergleichen, verhindert bzw. verringert wird, ohne einen von den bisherigen Systemen bekannten Aufwand zur hermetischen Abdichtung des Gehäuses zu erfordern.

Diese Aufgabe wird bei einem Lasermodul der eingangs genannten Art erfindungsgemäß dadurch gelöst, dass das Lasermodul mindestens einen primären Abdichtbereich und einen in dem primären Abdichtbereich angeordneten sekundären Abdichtbereich aufweist, und dass die Lasereinrichtung innerhalb des sekundären Abdichtbereichs angeordnet ist.

Durch die erfindungsgemäße Vorsehung der beiden kaskadierten Abdichtbereiche ergibt sich vorteilhaft eine im Vergleich zu herkömmlichen Systemen gesteigerte Dichtwirkung unter gleichzeitiger Vermeidung eines gesteigerten konstruktiven Aufwands.

Erfindungsgemäß ist erkannt worden, dass bei der Vorsehung mehrerer kaskadierter Abdichtbereiche eine verbesserte Anpassung der Eigenschaften der Abdichtbereiche an die hiervon zu schützenden Komponenten gegeben ist. Während die Lasereinrichtung selbst und eine ihr zugeordnete Aufweiteoptik der größten Strahlungsintensität in dem Lasermodul ausgesetzt ist und damit - bei Anwesenheit von Schmutzpartikeln - in größtem Maße durch die vorstehend beschriebene laser assisted deposition beeinträchtigt werden kann, ist die Strahlungsintensität der Laserstrahlung im Bereich eines das Lasermodul z.B. zu einem Brennraum einer Brennkraftmaschine hin begrenzenden Brennraumfensters deutlich geringer, so dass das Brennraumfenster in deutlich geringerem Maße der laser assisted deposition unterliegt.

Dementsprechend wird erfindungsgemäß vorteilhaft ein erster Abdichtbereich vorgesehen, der beispielsweise durch das seither auch vorhandene Gehäuse des Lasermoduls gebildet ist. Für alle optischen Komponenten des Lasermoduls, die nur einer verhältnismäßig geringen Strahlungsintensität ausgesetzt sind, ergibt sich bereits allein durch die Anordnung in dem ersten Abdichtbereich eine hinreichende Schutzwirkung vor Verschmutzung. Erfindungsgemäβ weist der primäre Abdichtbereich eine Helium dicht heit von etwa kleiner gleich 10^-4 mbar*l/s, jedoch gröβer als etwa 10^-10 mbar * l/s, auf.

Für die aufgrund der hohen Strahlungsintensität besonders verschmutzungsanfällige Lasereinrichtung selbst ist vorteilhaft ein eigener, sekundärer Abdichtbereich vorgesehen, der bevorzugt vollständig innerhalb des primären Abdichtbereichs liegt. Damit ist die Lasereinrichtung gleich zweifach vor Verschmutzung geschützt.

Besonders vorteilhaft muss durch diese erfindungsgemäße Konfiguration das den primären Abdichtbereich realisierende Gehäuse des Lasermoduls nicht wie bei den bisherigen Systemen hermetisch, d.h. maximal gut gegen äußere Einflüsse wie z.B. den Eintrag von Schmutzpartikeln abgedichtet werden, sondern kann mit einer konstruktiv weniger aufwendigen Abdichtung ausgebildet sein, die zu dem Schutz des Brennraumfensters und sonstiger Komponenten ausreicht, welche nur einer verhältnismäßig geringen Strahlungsintensität ausgesetzt sind.

Der vorzugsweise etwas besser abzudichtende sekundäre Abdichtbereich muss ebenfalls nicht mit dem von herkömmlichen Systemen bekannten Aufwand abgedichtet werden, weil er bereits weitgehend durch den primären Abdichtbereich geschützt ist und in dem primären Abdichtbereich auch geringere Temperaturen und Druckwerte vorliegen als an der Außenoberfläche des Gehäuses des Lasermoduls.

Der primäre Abdichtbereich und der sekundäre Abdichtbereich können einer vorteilhaften Erfindungsvariante zufolge jeweils eine unterschiedliche Dichtheit aufweisen, sodass neben einer optimalen Schutzwirkung auch eine wirtschaftlichere Fertigung des Lasermoduls möglich ist. Beispielsweise kann der primäre Abdichtbereich eine Heliumdichtheit von etwa kleiner gleich 10^-7 mbar*1/s aufweisen, jedoch größer als etwa 10^-10 mbar*1/s, während der sekundäre Abdichtbereich eine Heliumdichtheit von etwa kleiner gleich 10^-10 mbar*1/s aufweist.

Erfindungsgemäβ ist zusätzlich zu der Lasereinrichtung mindestens eine der Lasereinrichtung zugeordnete Aufweiteoptik, die von der Lasereinrichtung erzeugte Laserimpulse bzw. deren Strahlengang aufweitet, innerhalb des sekundären Abdichtbereichs angeordnet.

Der sekundäre Abdichtbereich kann bei einer weiteren vorteilhaften Erfindungsvariante gebildet sein durch einen Innenraum eines sekundären Gehäuses, das vollständig innerhalb des Gehäuses des Lasermoduls angeordnet ist

Das sekundäre Gehäuse kann einen im wesentlichen hohlzylindrischen Grundkörper aufweisen, der insbesondere an mindestens einer Stirnseite einen für die Wellenlänge der erzeugten Laserimpulse und/oder eines der Lasereinrichtung zugeführten Pumplichts optisch durchlässigen Bereich aufweist, vorzugsweise in Form eines oder mehrerer Fenster. Der optisch durchlässige Bereich kann auch als strahl-abbildende Optik ausgebildet sein, welche das Pumplicht formt.

Das sekundäre Gehäuse kann weiter vorteilhaft zumindest teilweise aus Glas und/oder Metall bestehen, wobei das Metall so ausgewählt ist, dass es einen zu dem Wärmeausdehnungskoeffizienten des verwendeten Glaswerkstoffs vergleichbaren Wärmeausdehnungskoeffizienten aufweist, damit sich an den Fügestellen zwischen den Werkstoffen keine Öffnungen ergeben.

Ein besonders guter Schutz der in dem sekundären Abdichtbereich angeordneten optischen Komponenten ergibt sich dann, wenn der sekundäre Abdichtbereich evakuiert ist oder eine vorgebbare Atmosphäre, insbesondere Inertgas unter vorgebbarem Druck oder dergleichen, aufweist.

Generell kann ein sehr wirtschaftlicher Aufbau des erfindungsgemäßen Lasermoduls dadurch erreicht werden, dass die jeweilige Dichtheit der Abdichtbereiche in Abhängigkeit von einer Strahlungsintensität gewählt ist, die bei dem Betrieb des Lasermoduls in den Abdichtbereichen auftritt, so dass nur die empfindlichsten und einer Verschmutzung in größtem Maße ausgesetzten Komponenten verhältnismäßig gut durch den sekundären Abdichtbereich gekapselt werden müssen, während für die weiteren Komponenten ein geringer Abdichtaufwand ausreicht.

Das erfindungsgemäße Lasermodul kann vorteilhaft eingesetzt werden in laserbasierten Zündeinrichtungen von Brennkraftmaschinen von Kraftfahrzeugen und/oder Stationärmotoren bzw. Turbinen und bevorzugt in allen Betriebsumgebungen, bei denen herkömmliche Lasermodule aufgrund ihrer Anfälligkeit für Verschmutzungen nur eine unzureichende Standzeit aufweisen.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung.

Kurze Beschreibung der Zeichnung

In der Zeichnung zeigt:
- Figur 1: eine Ausführungsform des erfindungsgemäßen Lasermoduls, und
- Figur 2: ein nicht erfindungsgemäßes Lasermodul.

### Ausführungsformen der Erfindung

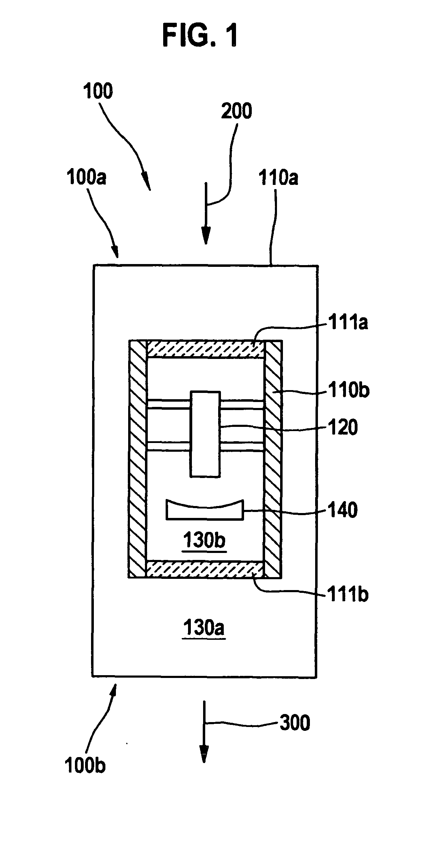

Figur 1 zeigt eine Ausführungsform des erfindungsgemäßen Lasermoduls 100. Das Lasermodul 100 verfügt über einen primären Abdichtbereich 130a, der eine vorgebbare Dichtwirkung gegenüber einer Umgebung aufweist und damit das Eindringen von Partikeln aus der Umgebung in das Innere des Lasermoduls 100 verhindert.

Der primäre Abdichtbereich 130a ist vorliegend durch ein primäres Gehäuse 110a realisiert, das die weiteren Komponenten des erfindungsgemäßen Lasermoduls vorzugsweise allseitig umgibt. In einem ersten Endbereich 100a weist das primäre Gehäuse 110a einen optisch durchlässigen Bereich auf, um das Einstrahlen von Pumplicht 200 in den primären Abdichtbereich 130a zu ermöglichen. Das Pumplicht 200 wird vorwiegend zum optischen Pumpen eines z.B. passiv gütegeschalteten Festkörperlasers der Lasereinrichtung 120 benötigt, die in dem Lasermodul 100 enthalten ist und die unter Beaufschlagung mit dem Pumplicht 200 Laserimpulse erzeugt, die in Figur 1 durch den Pfeil 300 symbolisiert sind.

Dementsprechend weist das primäre Gehäuse 110a auch in dem zweiten Endbereich 100b einen optisch durchlässigen Bereich auf, der das Auskoppeln der Laserimpulse 300 aus dem Lasermodul 100 ermöglicht.

Die vorstehend beschriebenen, nicht im Detail abgebildeten optisch durchlässigen Bereiche sind beispielsweise durch Laserfenster mit planparallelen Oberflächen gebildet oder auch durch Fokussieroptiken oder eine Kombination hieraus. Bei einer Verwendung des in Figur 1 abgebildeten Lasermoduls 100 in einer Zündeinrichtung eines Kraftfahrzeugs kann in dem zweiten Endbereich 100b speziell ein Brennraumfenster oder auch ein sog. Linsenfenster vorgesehen sein, die das Einstrahlen und/oder Fokussieren des Laserimpulses 300 in einen Brennraum der Brennkraftmaschine ermöglicht

Erfindungsgemäß ist neben dem vorstehend beschriebenen primären Gehäuse 110a, das den primären Abdichtbereich 130a bildet, ein weiterer, sekundärer Abdichtbereich 130b vorgesehen. Der sekundäre Abdichtbereich 130b ist vorliegend durch ein separates, sekundäres Gehäuse 110b gebildet, das wie in Figur 1 abgebildet, vollständig innerhalb des primären Abdichtbereichs 130a angeordnet ist. Dadurch ist das sekundäre Gehäuse 110b im Vergleich zu dem primären Gehäuse 110a erfindungsgemäß vorteilhaft einer geringeren Verschmutzung ausgesetzt, nämlich nur derjenigen Partikelbeaufschlagung, die von den Partikeln herrührt, die bereits in den primären Abdichtbereich 130a gelangt sind.

Besonders vorteilhaft muss durch diese erfindungsgemäße Konfiguration das den primären Abdichtbereich 130a realisierende Gehäuse 110a des Lasermoduls 100 nicht wie bei den bisherigen Systemen hermetisch, d.h. maximal gut gegen äußere Einflüsse wie z.B. den Eintrag von Schmutzpartikeln abgedichtet werden, sondern kann mit einer konstruktiv weniger aufwendigen Abdichtung ausgebildet sein, die zu dem Schutz des Brennraumfensters und sonstiger Komponenten ausreicht, welche nur einer verhältnismäßig geringen Strahlungsintensität ausgesetzt sind.

Der vorzugsweise etwas besser abzudichtende sekundäre Abdichtbereich 130b muss ebenfalls nicht mit dem von herkömmlichen Systemen bekannten Aufwand abgedichtet werden, weil er bereits weitgehend durch den primären Abdichtbereich 130a geschützt ist und in dem primären Abdichtbereich 130a auch geringere Temperaturen und Druckwerte vorliegen als an der Außenoberfläche des primären Gehäuses 110a des Lasermoduls 100.

Der primäre Abdichtbereich 130a und der sekundäre Abdichtbereich 130b können einer vorteilhaften Erfindungsvariante zufolge jeweils eine unterschiedliche Dichtheit aufweisen, sodass neben einer optimalen Schutzwirkung auch eine wirtschaftlichere Fertigung des Lasermoduls 100 möglich ist. Erfindungsgemäβ weist der primäre Abdichtbereich 130a eine Heliumdichtheit von etwa kleiner gleich 10^-4 mbar*l/s auf, jedoch größer als etwa 10^-10 mbar*l/s, während der sekundäre Abdichtbereich 130b beispielsweise eine Heliumdichtheit von etwa kleiner gleich 10^-7 mbar*l/s aufweist.

Zusätzlich zu der Lasereinrichtung 120 ist wie in Figur 1 abgebildet mindestens eine der Lasereinrichtung 120 zugeordnete Optik 140 innerhalb des sekundären Abdichtbereichs 130b angeordnet. Vorliegend handelt es sich hierbei um eine Aufweiteoptik 140, die die von der Lasereinrichtung 120 erzeugten Laserimpulse 300 bzw. deren Strahlengang aufweitet und dementsprechend auch noch einer verhältnismäßig hohen Strahlungsintensität ausgesetzt ist.

Das sekundäre Gehäuse 110b kann wie abgebildet einen im wesentlichen hohlzylindrischen Grundkörper aufweisen, der stirnseitig vorliegend als Laserfenster 111a, 111b ausgebildete optisch durchlässige Bereiche aufweist, um eine Transmission von Pumplicht 200 zu der Lasereinrichtung 120 und von Laserimpulsen 300 aus dem sekundären Gehäuse 110b heraus zu ermöglichen.

Alternativ oder ergänzend hierzu kann der jeweilige durchlässige Bereich 111a, 111b auch als strahl-abbildende Optik ausgebildet sein, z.B. um das eingestrahlte Pumplicht 200 auf die Lasereinrichtung 120 zu formen und so eine Optimierung des gepumpten Modenvolumens zu ermöglichen.

Das sekundäre Gehäuse 110b kann erfindungsgemäß aus verschiedenen Materialien bestehen, die die Ausbildung eines dichtenden Gehäuses 110b bei gleichzeitiger Temperatur- und/oder Druckbeständigkeit für den geplanten Einsatzbereich des Lasermoduls 100 erlauben. Bevorzugt werden Metall und/oder Glas für den nicht näher bezeichneten hohlzylindrischen Grundkörper und spezielles Laserglas für die Laserfenster 111a, 111b verwendet, wobei das Metall so ausgewählt ist, dass es einen zu dem Wärmeausdehnungskoeffizienten des verwendeten Glaswerkstoffs vergleichbaren Wärmeausdehnungskoeffizienten aufweist, damit sich an den Fügestellen zwischen den Werkstoffen keine die Dichtwirkung beeinträchtigenden Öffnungen ergeben. Insbesondere kann ein metallischer Werkstoff gemäß DIN 17745, z.B. Werkstoffnummer 1.3981, 1.3922, 1.3920, zum Einsatz kommen.

Als Fügemechanismen zwischen dem Glas und dem Metall kommen insbesondere Löten und/oder Kleben und/oder Schweißen in Betracht.

Bei der Ausbildung des sekundären Gehäuses 110b kann vorteilhaft auf bestehende Technologien und Fertigungsverfahren z.B. aus dem Bereich der Vakuum- bzw. Röhrentechnik zurückgegriffen werden. Die Halterung der optischen Komponenten 120, 140 in dem sekundären Gehäuse 110b kann wie in Figur 1 angedeutet durch nicht näher bezeichnete Halteelemente erfolgen, die z.B. als herkömmliche Glas-/Metalldurchführungen ausgebildet sind oder auch als formschlüssige Metallhalterungen.

Ein besonders guter Schutz der in dem sekundären Abdichtbereich 130b angeordneten optischen Komponenten 120, 140 ergibt sich dann, wenn der sekundäre Abdichtbereich 130b evakuiert ist oder eine vorgebbare Atmosphäre, insbesondere Inertgas unter vorgebbarem Druck oder dergleichen, aufweist, die bei einer Fertigung unter entsprechenden Reinraumbedingungen herstellbar ist.

Generell kann ein sehr wirtschaftlicher Aufbau des erfindungsgemäßen Lasermoduls 100 dadurch erreicht werden, dass die jeweilige Dichtheit der Abdichtbereiche 130a, 130b in Abhängigkeit von einer Strahlungsintensität gewählt ist, die bei dem Betrieb des Lasermoduls 100 in den Abdichtbereichen 130a, 130b auftritt.

Insgesamt kann auf diese Weise mit einem weitaus geringeren konstruktiven Aufwand als bei den herkömmlichen Lasermodulen ein verbesserter Schutz der optischen Elemente, insbesondere der Oberflächen der Lasereinrichtung 120, realisiert werden, die vorliegend durch die zwei kaskadierten Abdichtbereiche 130a, 130b doppelt vor Verschmutzung geschützt ist.

Gleichzeitig sind diejenigen optischen Flächen, wie z.B. die Oberfläche eines nicht abgebildeten Brennraumfensters in dem Endbereich 100b, die im Vergleich zu der Lasereinrichtung 120 nur einer verhältnismäßig geringen Strahlungsintensität der Laserstrahlung ausgesetzt sind, dennoch wirksam durch das primäre Gehäuse 110a geschützt, das jedoch insbesondere nicht hermetisch abgedichtet werden muss, wie dies bei dem Stand der Technik der Fall ist.

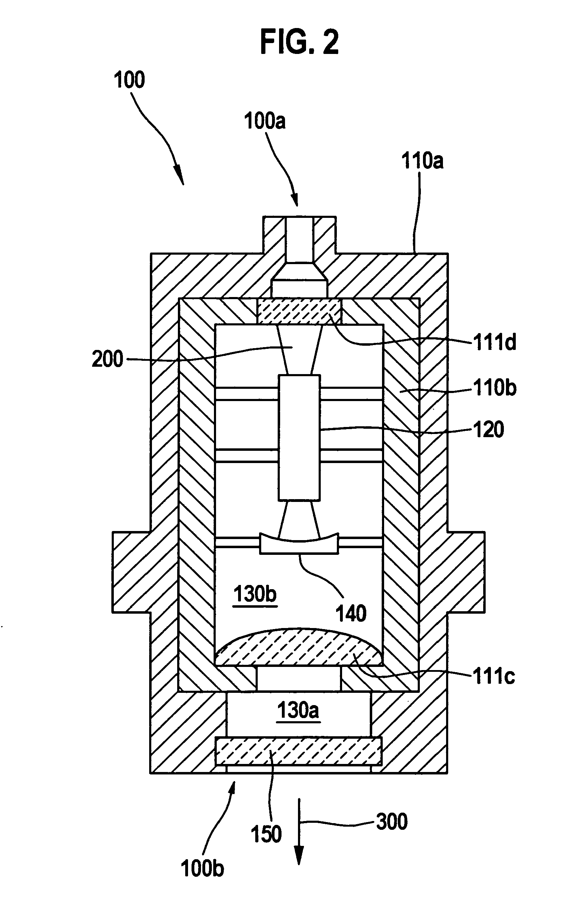

Figur 2 zeigt ein nicht erfindungsgemäßes Lasermodul 100, bei dem das den sekundären Abdichtbereich 130b realisierende sekundäre Gehäuse 110b weitestgehend mit dem primären Gehäuse 110a verbunden ist, so dass sich ein vergleichsweise kleiner primärer Abdichtbereich 130a ergibt, der vorliegend zwischen einem Brennraumfenster 150 und einem zweiten Endbereich des sekundären Gehäuses 110b angeordnet ist.

An seinem zweiten Endbereich weist das sekundäre Gehäuse 110b gemäß Figur 2 eine Fokussieroptik 111c auf, die das sekundäre Gehäuse 110b gleichzeitig stirnseitig abdichtet und die von der Lasereinrichtung 120 erzeugten Laserimpulse 300 durch das Brennraumfenster 150 hindurch auf einen nicht abgebildeten Fokuspunkt außerhalb des Lasermoduls 100 bündelt.

An seinem ersten Endbereich 100a weist das primäre Gehäuse 110a einen Durchlass für eine nicht abgebildete Lichtleitereinrichtung auf, die die Lasereinrichtung 120 durch das Laserfenster 111d hindurch mit dem Pumplicht 200 versorgt. In diesem Bereich ist das sekundäre Gehäuse 110b dementsprechend nicht von dem primären Gehäuse 110a geschützt. D.h., im Gegensatz zu der unter Bezugnahme auf die Figur 1 beschriebenen Ausführungsform der Erfindung ist bei dem Lasermodul 100 gemäß Figur 2 der sekundäre Abdichtbereich 130b bzw. das den sekundären Abdichtbereich 130b realisierende sekundäre Gehäuse 110b nicht vollständig in dem primären Gehäuse 110a integriert. Dennoch ergibt sich auch bei dem Lasermodul gemäß Figur 2 vorteilhaft eine verbesserte Schutzwirkung der optischen Komponenten vor Verschmutzung.

## Patentansprüche

1. Lasermodul (100) mit einem Gehäuse (110a) und mit mindestens einer in dem Gehäuse (110a) angeordneten Lasereinrichtung (120) zur Erzeugung von Laserimpulsen (300), wobei das Lasermodul (100) mindestens einen primären Abdichtbereich (130a) und einen in dem primären Abdichtbereich (130a) angeordneten sekundären Abdichtbereich (130b) aufweist, wobei die Lasereinrichtung (120) innerhalb des sekundären Abdichtbereichs (130b) angeordnet ist, **dadurch gekennzeichnet, dass** der primäre Abdichtbereich (130a) eine Heliumdichtheit von etwa kleiner gleich 10^-4 mbar*l/s, jedoch größer als etwa 10^-10 mbar*l/s aufweist und dass zusätzlich zu der Lasereinrichtung (120) mindestens eine der Lasereinrichtung (120) zugeordnete Aufweiteoptik (140), die von der Lasereinrichtung (120) erzeugte Laserimpulse (300) bzw. deren Strahlengang aufweitet, innerhalb des sekundären Abdichtbereichs (130b) angeordnet ist.

2. Lasermodul (100) nach Anspruch 1, **dadurch gekennzeichnet, dass** der primäre Abdichtbereich (130a) und der sekundäre Abdichtbereich (130b) jeweils eine unterschiedliche Dichtheit aufweisen.

3. Lasermodul (100) nach einem der vorstehenden Ansprüche, **dadurch gekennzeichnet, dass** der sekundäre Abdichtbereich (130b) eine Heliumdichtheit von etwa kleiner gleich 10^-7 mbar*l/s aufweist.

4. Lasermodul (100) nach einem der vorstehenden Ansprüche, **dadurch gekennzeichnet, dass** der sekundäre Abdichtbereich (130b) gebildet ist durch einen Innenraum eines sekundären Gehäuses (110b), das vollständig innerhalb des Gehäuses (110a) des Lasermoduls (100) angeordnet ist.

5. Lasermodul (100) nach Anspruch 4, **dadurch gekennzeichnet, dass** das sekundäre Gehäuse (110b) einen im wesentlichen hohlzylindrischen Grundkörper aufweist, der insbesondere an mindestens einer Stirnseite einen für die Wellenlänge der erzeugten Laserimpulse (300) und/oder eines der Lasereinrichtung (120) zugeführten Pumplichts (200) optisch durchlässigen Bereich aufweist, vorzugsweise in Form eines oder mehrerer Fenster (111a, 111 b).

6. Lasermodul (100) nach Anspruch 5, **dadurch gekennzeichnet, dass** der optisch durchlässige Bereich als strahl-abbildende Optik (111c) ausgebildet ist.

7. Lasermodul (100) nach einem der Ansprüche 4 bis 6, **dadurch gekennzeichnet, dass** das sekundäre Gehäuse (110b) zumindest teilweise aus Glas und/oder Metall besteht, wobei das Metall so ausgewählt ist, dass es einen zu dem Wärmeausdehnungskoeffizienten des verwendeten Glaswerkstoffs vergleichbaren Wärmeausdehnungskoeffizienten aufweist.

8. Lasermodul (100) nach einem der vorstehenden Ansprüche, **dadurch gekennzeichnet, dass** der sekundäre Abdichtbereich (130b) evakuiert ist oder eine vorgebbare Atmosphäre, insbesondere Inertgas unter vorgebbarem Druck oder dergleichen, aufweist.

9. Zündeinrichtung für eine Brennkraftmaschine mit mindestens einem Lasermodul (100) nach einem der vorstehenden Ansprüche.

## Claims

1. Laser module (100) having a housing (110a) and having at least one laser device (120), arranged in the housing (110a), for generating laser pulses (300), wherein the laser module (100) has at least a primary sealing region (130a) and a secondary sealing region (130b) arranged in the primary sealing region (130a), wherein the laser device (120) is arranged within the secondary sealing region (130b), **characterized in that** the primary sealing region (130a) has a helium leak tightness of approximately less than/equal to 10⁻⁴ mbar*l/s, but more than approximately 10⁻¹⁰ mbar*l/s, and **in that**, in addition to the laser device (120), at least one widening optical system (140), which is assigned to the laser device (120) and widens laser pulses (300) generated by the laser device (120), or the beam path of said laser pulses, is arranged within the secondary sealing region (130b).

2. Laser module (100) according to Claim 1, **characterized in that** the primary sealing region (130a) and the secondary sealing region (130b) each have a different leak tightness.

3. Laser module (100) according to either of the preceding claims, **characterized in that** the secondary sealing region (130b) has a helium leak tightness of approximately less than/equal to 10⁻⁷ mbar*l/s.

4. Laser module (100) according to one of the preceding claims, **characterized in that** the secondary sealing region (130b) is formed by an internal space of a secondary housing (110b), which is arranged completely within the housing (110a) of the laser module (100).

5. Laser module (100) according to Claim 4, **characterized in that** the secondary housing (110b) has a substantially hollow-cylindrical main body, which, in particular at at least one end face, has a region which is optically transmissive for the wavelength of the generated laser pulses (300) and/or of a pumping light (200) fed to the laser device (120) and is preferably in the form of one or more windows (111a, 111b).

6. Laser module (100) according to Claim 5, **characterized in that** the optically transmissive region is in the form of a beam-projecting optical system (111c).

7. Laser module (100) according to one of Claims 4 to 6, **characterized in that** the secondary housing (110b) consists at least partially of glass and/or metal, wherein the metal is selected in such a way that it has a coefficient of thermal expansion which is comparable to the coefficient of thermal expansion of the glass material used.

8. Laser module (100) according to one of the preceding claims, **characterized in that** the secondary sealing region (130b) is evacuated or has a predefinable atmosphere, in particular inert gas at a predefinable pressure or the like.

9. Ignition device for an internal combustion engine comprising at least one laser module (100) according to one of the preceding claims.

## Revendications

1. Module laser (100) qui présente un boîtier (110a) et au moins un dispositif laser (120) disposé dans le boîtier (110a) et destiné à former des impulsions laser (300),
le module laser (100) présentant au moins une partie d'étanchéité primaire (130a) et une partie d'étanchéité secondaire (130b) disposée dans la partie d'étanchéité primaire (130a),
le dispositif laser (120) étant disposé à l'intérieur du dispositif d'étanchéité secondaire (130b),
**caractérisé en ce que**
la partie d'étanchéité primaire (130a) présente une étanchéité à l'hélium sensiblement inférieure ou égale à 10⁻⁴ mbars*l/s mais supérieure à environ 10⁻¹⁰ mbars*l/s et
**en ce qu'**en plus du dispositif laser (120), au moins une optique d'agrandissement (140) associée au dispositif laser (120) et qui agrandit les impulsions laser (300) formées par le dispositif laser (120) ou leur parcours de rayon est disposée à l'intérieur de la partie d'étanchéité secondaire (130b).

2. Module laser (100) selon la revendication 1, **caractérisé en ce que** la partie d'étanchéité primaire (130a) et la partie d'étanchéité secondaire (130b) présentent des étanchéités différentes.

3. Module laser (100) selon l'une des revendications précédentes, **caractérisé en ce que** la partie d'étanchéité secondaire (130b) présente une étanchéité à l'hélium sensiblement inférieure ou égale à 10⁻⁷ mbars*l/s.

4. Module laser (100) selon l'une des revendications précédentes, **caractérisé en ce que** la partie d'étanchéité secondaire (130b) est formée par un espace intérieur d'un boîtier secondaire (110b) disposé entièrement à l'intérieur du boîtier (110a) du module laser (100).

5. Module laser (100) selon la revendication 4, **caractérisé en ce que** le boîtier secondaire (110b) présente un corps de base essentiellement en cylindre creux qui présente en particulier sur au moins un côté frontal une partie optiquement transparente à la longueur d'onde des impulsions laser (300) formées et/ou de la lumière de pompage (200) apportée au dispositif laser (120), et qui présente de préférence la forme d'une ou de plusieurs fenêtres (111a, 111b).

6. Module laser (100) selon la revendication 5, **caractérisé en ce que** la partie optiquement transparente est configurée comme optique (111c) de formation de l'image d'un faisceau.

7. Module laser (100) selon l'une des revendications 4 à 6, **caractérisé en ce que** le boîtier secondaire (110b) est constitué au moins en partie de verre et/ou de métal, le métal étant sélectionné de manière à présenter un coefficient de dilatation thermique comparable au coefficient de dilatation thermique du matériau de verre utilisé.

8. Module laser (100) selon l'une des revendications précédentes, **caractérisé en ce que** la partie d'étanchéité secondaire (130b) est mise sous vide ou présente une atmosphère prédéterminée, en particulier un gaz inerte sous une pression prédéterminée ou similaires.

9. Dispositif d'allumage de moteur à combustion interne présentant au moins un module laser (100) selon l'une des revendications précédentes.
